# NEUE EUROPÄISCHE PATENTSCHRIFT

(11) **EP 1 375 263 B2**
(45) Veröffentlichungstag und Bekanntmachung des Hinweises auf die Entscheidung über den Einspruch: **29.10.2008**
(45) Hinweis auf die Patenterteilung: 27.07.2005
(21) Anmeldenummer: 03090171.4
(22) Anmeldetag: 05.06.2003
(51) Int. Cl.: B60R 21/16

(54) **Insassenschutzeinrichtung für Kraftfahrzeuge**
Vehicle occupant protection device
Disposittif de protection de passager de vehicule

(30) Priorität: 25.06.2002 DE 10229102
(43) Veröffentlichungstag der Anmeldung: 02.01.2004
(73) Patentinhaber: TAKATA CORPORATION, Minato-ku, Tokyo 106-8510 (JP)
(72) Erfinder: Bossecker, Maximilian, 76532 Baden-Baden (DE); Getz, Robert, 89077 Ulm (DE); Karlbauer, Ulrich, 89079 Ulm (DE)
(74) Vertreter: Baumgärtel, Gunnar

(56) Entgegenhaltungen:
- DE-A- 4 420 156
- DE-A- 10 129 581
- DE-U- 29 903 778
- US-A1- 2002 008 370
- US-B1- 6 168 193
- US-B1- 6 237 938
- US-B1- 6 361 068

## Beschreibung

Die Erfindung betrifft eine Insassenschutzeinrichtung für Kraftfahrzeuginsassen nach dem Oberbegriff des Patentanspruchs 1.

Eine derartige Einrichtung ist aus DE 29 903 778 U1 und DE 10 129 581 A1 bekannt und umfasst einen Gassack, der an einer Kraftfahrzeugkarosserie im Bereich der seitlichen Dachkante des Kraftfahrzeugs angeordnet wird und der sich beim Aufblasen mittels eines Gasgenerators nach unten entfaltet, so dass er sich im aufgeblasenen Zustand wie ein Vorhang vor mindestens einem Seitenfenster des Kraftfahrzeugs erstreckt, wobei die Oberkante des Gassackes entlang der Dachkante des Kraftfahrzeugs verläuft und die Unterkante des Gassackes etwa auf Höhe einer Türbrüstung (z.B. in Fahrzeuglängsrichtung) verläuft. Weiterhin sind Führungsmittel vorgesehen, mittels derer die Unterkante des Gassackes beim Aufblasen entlang der Entfaltungsrichtung des Gassackes nach unten geführt werden kann, wozu die Führungsmittel mit einem Abschnitt des Gassackes im Bereich von dessen Unterkante verbunden sind.

Ein Problem bei derartigen Insassenschutzeinrichtungen für Kraftfahrzeuge liegt darin, durch eine gezielte Führung der Unterkante des Gassackes zu erreichen, dass die Unterkante des Gassackes im aufgeblasenen Zustand hinreichend verspannt ist, um zu verhindern, dass der zu schützende Kraftfahrzeuginsasse in einem Crash-Fall, z.B. bei einem Überschlagen des Kraftfahrzeugs, durch eine Seitenscheibe des Kraftfahrzeugs hinausgeschleudert werden kann.

Der Erfindung liegt das Problem zugrunde, eine Insassenschutzeinrichtung der eingangs genannten Art zu schaffen, die sich bei einfachem Aufbau durch eine zuverlässige Verspannung der Unterkante des aufgeblasenen Gassackes auszeichnet.

Dieses Problem wird erfindungsgemäß durch die Schaffung einer Insassenschutzeinrichtung mit den Merkmalen des Patentanspruchs 1 gelöst.

Danach ist die Unterkante des Gassackes mit einem entlang der Entfaltungsrichtung des Gassackes an der Kraftfahrzeugkarosserie bewegbar geführten (und z.B. in dieser Richtung erstreckten) Abschnitt eines länglichen Elementes verbunden, das zur Führung der Unterkante des Gassackes in Entfaltungsrichtung beim Aufblasen des Gassackes dient.

Dabei wird das längserstreckte Element mittels zweier in Entfaltungsrichtung des Gassackes voneinander beabstandeter Führungselemente geführt, die insbesondere jeweils als Umlenkelemente ausgebildet und mit der Fahrzeugkarosserie verbunden sind. Diese beiden Führungs- bzw. Umlenkelemente sorgen für eine gezielte Positionierung des längserstreckten Elementes entlang der Fahrzeugkarosserie bereits vor dem Entfalten des Gassackes. Denn aufgrund ihrer Verbindung mit der Fahrzeugkarosserie bilden die beiden Führungs- bzw. Umlenkelemente eine karosserieseitige Führungseinrichtung, mittels der das längserstreckte Element bereits vor dem Entfalten des Gassackes (also auch in dem Zustand, in dem der Gassack am Dachkantenbereich des entsprechenden Kraftfahrzeugs verstaut ist) definiert geführt ist. Bei einem Aufblasen des Gassackes in einem Crash-Fall erfolgt dann nach dem sogenannten Fahnenmastprinzip" eine Bewegung des längserstreckten Elementes lediglich in der Weise, dass ein anderer Abschnitt des längserstreckten Elementes in den Bereich zwischen den beiden Führungs- bzw. Umlenkelementen gerät und der vor dem Aufblasen des Gassackes zwischen den beiden Umlenkelementen befindliche Abschnitt des längserstreckten Elementes aus diesem Bereich herausgeführt wird. Hierdurch wird eine definierte und zuverlässige Führung des Gassackes mittels des längserstreckten Elementes im Bereich zwischen den beiden Umlenkelementen erreicht, nämlich eine gezielte Führung entlang der Fahrzeugkarosserie.

Um eine möglichst starke Straffung der Unterkante des Gassackes zu erreichen, wird das längserstreckte Element derart geführt und gestrafft, dass der mit dem Gassack verbundene Abschnitt des längserstreckten Elementes beim Aufblasen und Entfalten des Gassackes nicht quer zur Erstreckungsrichtung des längserstreckten Elementes ausgelenkt wird.

Die Unterkante des Gassackes kann hierdurch beim Entfalten des Gassackes gezielt in eine Position geführt werden, in der eine hinreichende Verspannung der Unterkante des Gassackes gewährleistet ist. Hierzu muss das längserstreckte Element nicht aktiv durch einen zusätzlichen Antrieb in Entfaltungsrichtung bewegt werden, sondern die Bewegung des längserstreckten Elementes in Entfaltungsrichtung kann durch den sich beim Aufblasen entfaltenden Gassack selbst hervorgerufen werden. Entscheidend ist allein, dass das längserstreckte Element mittels geeigneter Führungselemente derart geführt ist, dass der Unterkante des Gassackes durch Zusammenwirken mit dem längserstreckten Element eine Entfaltung in der gewünschten Entfaltungsrichtung aufgezwungen wird. Mit anderen Worten ausgedrückt, ist das längserstreckte Element derart zu führen, dass durch die beim Entfalten des Gassackes auf das längserstreckte Element ausgeübten Kräfte eine Bewegung des längserstreckten Elementes entlang der gewünschten Entfaltungsrichtung des Gassackes ausgelöst wird.

Hierdurch wird mit einfachen Mitteln eine gezielte Entfaltung des Gassackes, insbesondere der Unterkante des Gassackes, in eine Position ermöglicht, in der die Unterkante des Gassackes eine hinreichende Spannung aufweist. Bei dem längserstreckten Element handelt es sich vorzugsweise um ein flexibles Zugmittel, z.B. in Form eines Seiles oder eines Bandes.

Um die beim Entfalten des Gassackes mittels des Führungselementes festgelegte Position der Unterkante des Gassackes aufrechtzuerhalten, kann eine Rücklaufsperre vorgesehen sein, die eine Bewegung des längserstreckten Elementes entgegen der Richtung, in der sich dieses beim Entfalten bewegt hatte, verhindert.

Zur Führung des längserstreckten Elementes entlang der gewünschten Entfaltungsrichtung des Gassackes dient mindestens ein Umlenkelement, wobei die Rücklaufsperre vorzugsweise neben einem der Umlenkelemente angeordnet ist.

Nach einer Ausführungsform der Erfindung ist das längserstreckte Element als eine geschlossene (endlose) Schlaufe ausgebildet, während nach einer anderen Ausführungsform das längserstreckte Element mit einem freien Ende am Gassack und mit dem anderen freien Ende an einem Teil der Kraftfahrzeugkarosserie festgelegt ist.

Die beiden Umlenkelemente können dabei sowohl unmittelbar mit einem Teil der Fahrzeugkarosserie, wie z.B. einer Halteplatte, verbunden sein, also insbesondere direkt an einem Teil der Fahrzeugkarosserie angeordnet oder befestigt sein, oder alternativ über eine weitere Baugruppe, z.B. in Form eines elastischen Elementes, mit einem Teil der Fahrzeugkarosserie verbunden sein. Entscheidend ist, dass keines der beiden Umlenkelemente am Gassack selbst angeordnet ist, also beim Entfalten des Gassackes nicht gemeinsam mit dem Gassack in Entfaltungsrichtung bewegt wird. Dementsprechend werden unter einem Teil der Kraftfahrzeugkarosserie beliebige karosseriefestem tragende Teile, insbesondere in Form eines Halteelementes, verstanden.

Ferner kann vorgesehen sein, dass die Bewegung des mit dem Gassack verbundenen Abschnittes des längserstreckten Elementes entlang der gewünschten Entfaltungsrichtung durch ein mit dem längserstreckten Element gekoppeltes Federelement unterstützt wird. Diese Ausführungsform ist insbesondere dann vorteilhaft, wenn das längserstreckte Element nach Art eines offenen Systems mit einem Ende am Gassack und mit dem anderen Ende an der Kraftfahrzeugkarosserie fixiert ist. Die Federkraft trägt auch zu einer definierten Straffung des längserstreckten Elementes bei.

Gemäß einer Weiterbildung der Erfindung ist der mit der Unterkante des Gassackes verbundene Abschnitt des längserstreckten Elementes derart geneigt bezüglich der Hauptentfaltungsrichtung des Gassackes (die von der Dachkante des Fahrzeugs entlang der vertikalen Fahrzeugachse senkrecht nach unten weist) geführt, dass die Unterkante des Gassackes beim Entfalten zunehmend gestrafft wird. Das längserstreckte Element dient dann also einer Verstärkung der Straffung der Unterkante des Gassackes, indem der natürlichen Entfaltungsrichtung des Gassackes von der Dachkante her nach unten eine zusätzliche Bewegung der Unterkante in Fahrzeuglängsrichtung aufgezwungen wird, die die Straffung der Unterkante verstärkt.

Die zur Führung und/oder Straffung des längserstreckten Elementes dienenden Baugruppen können zumindest teilweise an einem ohnehin vorhandenen Halteelement (Halteblech) des zum Aufblasen des Gassackes verwendeten Gasgenerators angeordnet sein.

In einer bevorzugten Ausführungsform der Erfindung ist vorgesehen, dass die Unterkante des Gassackes lediglich an einem Ende, insbesondere an einem einer vertikalen Säule, z.B. der B-Säule, des Fahrzeugs zugeordneten Ende mittels des längserstreckten Elementes geführt ist, während das andere Ende des Gassackes karosseriefest angeordnet ist.

Zur Verbindung des Gassackes mit dem längserstreckten Element können unterschiedliche Befestigungsmethoden verwendet werden.

Die Verbindung zwischen Gassack und längserstrecktem Element, insbesondere in Form eines Seiles oder Bandes, kann unlösbar, z.B. stoffschlüssig, durch Kleben oder Schweißen, erfolgen. Ferner kann eine Verbindung durch Nähen erfolgen, wenn an dem längserstreckten Element ein Abschnitt vorgesehen ist, der sich mit dem Gewebe des Gassackes über eine Naht verbinden lässt.

Für eine lösbare Verbindung zwischen Gassack und längserstrecktem Element kann vorgesehen sein, unter Verwendung einer am Gassack gebildeten Öffnung das längserstreckte Element mit dem Gassack zu verknoten. In einer anderen Variante kann eine Schlaufe des längserstreckten Elementes um einen an dem Gassack vorgesehenen Abnäher herumgelegt werden. Oder es kann eine lösbare Verbindung zwischen Gassack und längserstrecktem Element unter Verwendung eines Klipselementes hergestellt werden, das einerseits mit dem Gassack und andererseits mit dem längserstreckten Element verbunden ist. In einer weiteren Ausführungsform kann an der Gassackhülle eine Lasche oder Tasche angeordnet sein, mit der das längserstreckte Element in geeigneter verbunden wird.

Weitere Merkmale und Vorteile der Erfindung werden bei der nachfolgenden Beschreibung von Ausführungsbeispielen anhand der Figuren deutlich werden.

Es zeigen:
- Figur 1: eine Ansicht der seitlichen Karosserie eines Kraftfahrzeugs im Bereich eines vorderen Seitenfensters, mit einer Führungseinrichtung zur Führung eines im Dachkantenbereich angeordneten Gassackes beim Entfalten;
- Figur 2: eine Abwandlung des Ausführungsbeispiels aus Figur 1, die jedoch nicht zur Erfindung gelöst;
- Figur 3: eine schematische Darstellung betreffend die Verbindung eines längserstreckten Elementes der Führungseinrichtung aus den Figuren 1 und 2 mit dem Gassack durch Schweißen;
- Figur 4: eine schematische Darstellung einer Verbindung zwischen Gassack und längserstrecktem Element durch Nähen;
- Figuren 5a und 5b: schematische Darstellungen für eine Verbindung zwischen Gassack und längserstrecktem Element durch einen Klipp;
- Figur 6: eine schematische Darstellung einer Verbindung zwischen Gassack und längserstrecktem Element mittels einer Schlaufe des längserstreckten Elementes, die einen Abnäher des Gassackes umschlingt;
- Figur 7: eine schematische Darstellung der Verbindung zwischen Gassack und längserstrecktem Element durch Vernähen beider Enden des längserstreckten Elementes am Gassack;
- Figuren 8a und 8b: zwei Beispiele einer Verbindung zwischen Gassack und längserstrecktem Element unter Verwendung einer am Gassack vorgesehenen Tasche;
- Figur 9: eine Abwandlung der Ausführungsbeispiele aus den Figuren 8a und 8b.

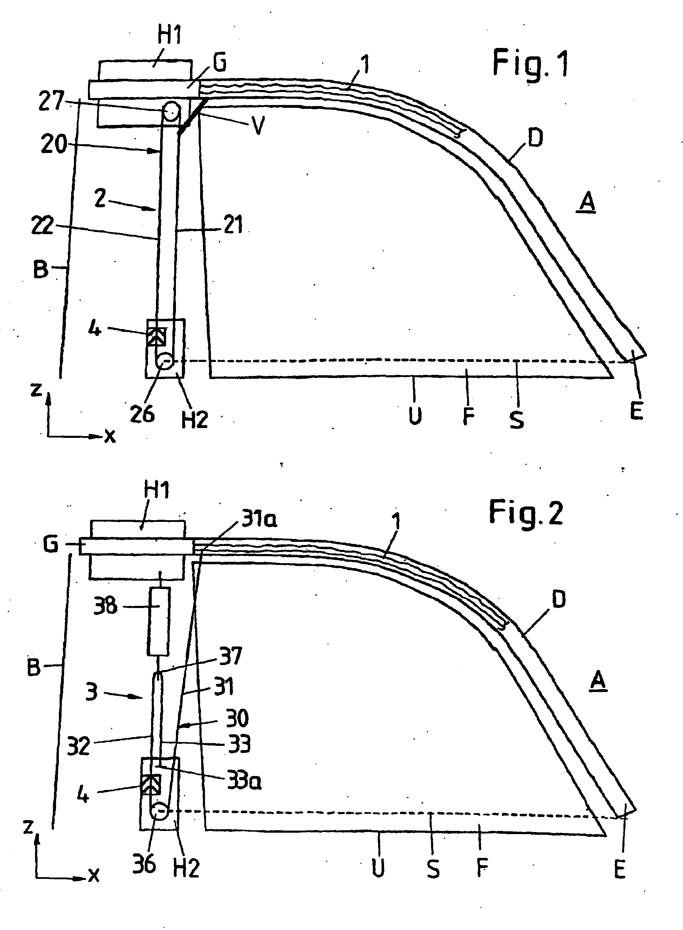

Figur 1 zeigt eine Ansicht der seitlichen Karosserie eines Kraftfahrzeugs im Bereich einer vorderen Seitenscheibe F. Diese wird nach oben und nach vorne begrenzt durch den Dachkantenbereich D des Kraftfahrzeugs, der sich - bezogen auf die Fahrzeuglängsachse x - nach vorne bis zur A-Säule des Kraftfahrzeugs erstreckt. Nach hinten wird die vordere Seitenscheibe F durch die senkrecht (entlang der vertikalen Fahrzeugachse z) verlaufende B-Säule und nach unten in üblicher Weise durch eine Türbrüstung begrenzt.

Am Dachkantenbereich D der Fahrzeugkarosserie ist in bekannter Weise ein Airbagmodul angeordnet, das einen sich im gefalteten Zustand entlang des gesamten, die vordere Seitenscheibe F einfassenden Dachkantenbereiches D erstreckenden Gassack 1 umfasst. Dieser ist mittels eines Gasgenerators G aufblasbar, der an einem am oberen Ende der B-Säule angeordneten Halteblech H1 befestigt ist.

Beim Aufblasen des Gassackes 1 mittels des Gasgenerators G entfaltet sich dieser nach unten in Rechtung auf die Unterkante U der vorderen Seitenscheibe F und bildet hierdurch einen Vorhang vor der Seitenscheibe F, der als Kopfschutz für einen Fahrzeuginsassen dienen und außerdem das Herausschleudern eines Fahrzeuginsassen durch die seitliche Fensterscheibe F verhindern soll. Hierzu ist von Bedeutung, dass die Unterkannte des entfalteten Gassackes entlang einer Spannungslinie S gespannt ist, die vom vorderen Ende E des Dachkantenbereiches D in Fahrzeuglängsrichtung zu der B-Säule B verläuft.

Bei dem in Figur 1 dargestellten Ausführungsbeispiel ist das vordere Ende der Unterkante des Gassackes (entsprechend dem vorderen Ende der Spannungslinie S) ortsfest am vorderen, unteren Ende E des Dachkantenbereiches D festgelegt. Das hintere Ende der Unterkante des Gassackes 1 ist demgegenüber mittels eines Verbindungselementes V mit einem ersten Abschnitt 21 eines längserstreckten Elementes 20 in Form eines eine geschlossene Schlaufe bildenden Seiles verbunden, das einen Bestandteil einer Führungseinrichtung 2 zur Führung des hinteren Endes der Unterkante des Gassackes beim Entfalten des Gassackes bildet.

Das Seil 20 ist mittels zweier Umlenkelemente 26, 27 derart geführt, dass ein Abschnitt 21 des Seiles 20 zu der hinteren Kante der Fensterscheibe F benachbart verläuft und ein anderer Abschnitt 22 des Seiles sich auf der der Fensterscheibe F abgewandten Seite des ersten Abschnittes 21 erstreckt. Beide Abschnitte 21, 22 des Seiles 20 verlaufen im Wesentlichen parallel zur vertikalen Fahrzeugachse z entlang der B-Säule B. Für eine stärkere Straffung der Unterkante des Gassackes 1 entlang der Spannungslinie S kann jedoch auch eine stärkere Neigung mindestens eines des Abschnitte 21, 22 des Seiles 20 zur vertikalen Fahrzeugachse z vorteilhaft sein, wie weiter unten anhand Figur 2 deutlich werden wird.

Das untere der beiden entlang der vertikalen Fahrzeugachse z voneinander beabstandeten Umlenkelemente 26, 27 ist an einer Halteplatte H2 (Halteblech) angeordnet, die an der B-Säule B in etwa auf der Höhe der unteren Scheibenkante U angeordnet ist. Das andere Umlenkelement 27 ist an der Halteplatte H1 angeordnet, die auch zur Aufnahme des Gasgenerators G dient. Bei den Umlenkelementen kann es sich beispielsweise um drehbar gelagerte Seilrollen handeln.

Ferner ist auf der unteren Halteplatte H2 eine Rücklaufsperre 4 angeordnet, die eine Bewegung des Seiles 20 in der Weise zulässt, dass sich der erste Seilabschnitt 21 (entlang der Entfaltungsrichtung des Gassackes 1) nach unten und der zweite Seilabschnitt 22 in entgegengesetzter Richtung nach oben bewegt, während eine Bewegung des Seiles 20 in umgekehrter Richtung gesperrt ist.

Wird in einem Crash-Fall mittels eines Sensors die in Figur 1 dargestellte Insassenschutzeinrichtung ausgelöst, so wird der Gassack 1 durch aus dem Gasgenerator G ausströmende Gase aufgeblasen und er entfaltet sich hierbei vom Dachkantenbereich D aus nach unten in Richtung auf die Unterkante U der vorderen Seitenscheibe F. Hierbei wird das hintere Ende der Unterkante des Gassackes 1, das über ein Verbindungselement V mit dem ersten Abschnitt 21 des Seiles 20 verbunden ist, präzise entlang der durch den Seilabschnitt 21 definierten Bahn geführt. Hierbei bewegt sich dieser Seilabschnitt 21 aufgrund der beim Entfalten des Gassackes 1 nach unten wirkenden Kräfte zusammen mit dem hinteren Ende der Unterkante des Gassackes 1 nach unten, d.h., das eine Schlaufe bildende Seil 20 insgesamt wird im Uhrzeigersinn um die als Seilrollen ausgebildeten Umlenkelemente 26, 27 bewegt.

Nach dem vollständigen Entfalten und Aufblasen des Gassackes 1 befindet sich das hintere Ende von dessen Unterkante im Bereich des unteren Umlenkelementes 26, wobei das hintere Ende der Unterkante zu diesem Punkt durch eine Bewegung des ersten Seilabschnittes 21 nach unten gelangt. (Der erste Seilabschnitt 21 und der zweite Seilabschnitt 22 bezeichnen jeweils denjenigen Abschnitt des Seiles, der der vorderen Seitenscheibe F benachbart bzw. der vorderen Seitenscheibe F abgewandt liegt. D. h., die Bereiche des Seiles 20, die jeweils den ersten Seilabschnitt 21 bzw. zweiten Seilabschnitt 22 bilden, ändern sich bei einer Bewegung des Seiles 20 um die Umlenkelemente 26, 27.)

Die Unterkante des Gassackes 1 ist dann entlang der Spannungslinie S zwischen dem vorderen unteren Ende E des Dachkantenbereiches D, wo das vordere Ende der Unterkante des Gassackes 1 fixiert ist, und dem unteren Ende des ersten Seilabschnittes 21, wo das hintere Ende der Unterkante des Gassackes 1 fixiert ist, verspannt und hierdurch gestrafft.

Die in Figur 2 dargestellte Ausführung, die nicht zur Erfindung gelöst, unterscheidet sich von dem in Figur 1 gezeigten in der Ausbildung der Führungseinrichtung 3, die zur Führung des hinteren Endes der Unterkante des Gassackes 1 entlang der B-Säule B dient. Die Führungseinrichtung 3 umfasst ein längserstrecktes Element 30 in Form eines Seiles, dessen einer Abschnitt 31 entlang der Hinterkante der vorderen Seitenscheibe F geführt ist und der mit einem freien Ende 31a am hinteren Ende der Unterkante des Gassackes 1 befestigt ist. Mittels eines an einer unteren Halteplatte H2 vorgesehenen Umlenkelementes 36 wird der erste Seilabschnitt 31 derart umgelenkt, dass sich auf der der Fensterscheibe F abgewandten Seite des ersten Seilabschnittes 31 ein zweiter Seilabschnitt 32 parallel zur vertikalen Fahrzeugachse bis zu dem unteren freien Ende 37 einer Zugfeder 38 erstreckt, die mit ihrem anderen Ende an der oberen Halteplatte H1 befestigt ist, die zur Aufnahme des Gasgenerators G dient. Im Bereich des unteren freien Endes 37 der Zugfeder 38 ist das Seil 30 erneut umgelenkt, so dass sich von dort ein weiterer Seilabschnitt 33 bis zu der unteren Halteplatte H2 erstreckt, an der jener Seilabschnitt 33 mit seinem freien Ende 33a fixiert ist.

Eine weitere Besonderheit des in Figur 2 gezeigten Ausführungsbeispiels liegt darin, dass der erste Seilabschnitt 31 nicht exakt parallel zur vertikalen Fahrzeugachse z bzw. zur hinteren Kante der Fensterscheibe F verläuft, sondern vielmehr leicht nach hinten geneigt ist. Hierdurch wird die Unterkante des Gassackes 1 beim Entfalten des Gassackes zusätzlich gestrafft, wie nachfolgend erläutert werden wird.

Wird in einem Crash-Fall die in Figur 2 gezeigte Insassenschutzeinrichtung ausgelöst, so wird der Gassack 1 mittels des Gasgenerators G mit Gas gefüllt, wobei sich der Gassack 1 in Richtung auf die Unterkante U der vorderen Seitenscheibe F entfaltet. Hierbei wird unter der Wirkung der Zugfeder 38 das mit dem einen freien Ende 31a des ersten Seilabschnittes 31 verbundene hintere Ende der Unterkante des Gassackes 1 in Richtung auf das untere Umlenkelement 36 der Führungseinrichtung 3 bewegt. Da diese Bewegung nicht exakt parallel zur vertikalen Fahrzeugachse z erfolgt, sondern vielmehr zusätzlich eine Komponente nach hinten (entlang der Fahrzeuglängsrichtung x, gerichtet zur Rückseite des entsprechenden Fahrzeugs) aufweist, wird durch die hiermit verbundene Verlagerung des hinteren Endes der Unterkante des Gassackes 1 die Unterkante zusätzlich gestrafft und hierdurch gespannt. Auch bei diesem Ausführungsbeispiel verhindert eine Rücklaufsperre 4, die an der unteren Halteplatte H2 angeordnet ist, einen Rücklauf des Seiles 30 nach dem Entfalten des Gassackes 1, so dass die Unterkante des Gassackes 1 dauerhaft entlang der Spannungslinie S zwischen dem vorderen unteren Ende E des Dachkantenbereiches D und dem unteren Umlenkelement 36 verspannt wird.

Besonders vorteilhaft bei den in Figur 1 bzw. Figur 2 dargestellten Ausführungsbeispielen einer Airbaganordnung ist jeweils die Führung des Gassackes (im Bereich seines hinteren unteren Endes) nach dem "Fahnenmastprinzip" wozu das jeweils als Straffelement dienende flexible Zugmittel in Form eines Seiles 20, 30 mittels zweier Umlenkelemente 26, 27 bzw. 36, 37 geführt ist, die in Entfaltungsrichtung des Gassackes 1 (d.h. entlang der vertikalen Fahrzeugachse z) voneinander beabstandet mit jeweils einem Teil H1, H2 der Kraftfahrzeugkarosserie verbunden sind. Das jeweilige Seil 20, 30 ist dabei schon vor dem Entfalten des Gassackes 1 (also im Ausgangszustand vor einem Auslösen des Gasgenerators) zwischen den jeweiligen Umlenkelementen 26, 27 bzw. 36, 37 geführt. Nach dem Auslösen des Airbagmodules und beim Entfalten des Gassackes 1 bewegt sich dann jeweils nur noch ein anderer Abschnitt des Seiles 20 bzw. 30 in den Bereich zwischen den beiden Umlenkelementen 26, 27 bzw. 36, 37, wobei das hintere untere Ende des Gassackes 1 nach unten mitgenommen wird.

Durch diese definierte Führung des jeweiligen Seiles 20, 30 nach dem Fahnenmastprinzip wird eine besonders zuverlässige Bewegung der hinteren unteren Kante des Gassackes 1 beim Entfalten sichergestellt.

Dabei kann durchaus ein Umlenkelement (vgl. das obere Umlenkelement 37 bei dem Ausführungsbeispiel gemäß Figur 2) mittelbar über eine weitere Baugruppe (z. B. eine Zugfeder 38) mit dem entsprechenden Kraftfahrzeugteil H1 verbunden sein, wodurch eine gewisse Bewegung des Umlenkelementes 37 beim Entfalten des Gassackes 1 herbeigeführt wird. Entscheidend ist aber, dass keines der Umlenkelemente in der Weise mit dem Gassack verbunden ist, dass das Umlenkelement beim Entfalten des Gassackes von diesem mitgenommen wird und sich gemeinsam mit einem Abschnitt des Gassackes in Entfaltungsrichtung bewegt. Denn dies hätte eine undefinierte, nicht genau vorhersehbare Positionierung des entsprechenden Umlenkelementes beim Entfalten des Gassackes zur Folge. Dies soll bei Verwendung des Fahnenmastprinzips gerade verhindert werden.

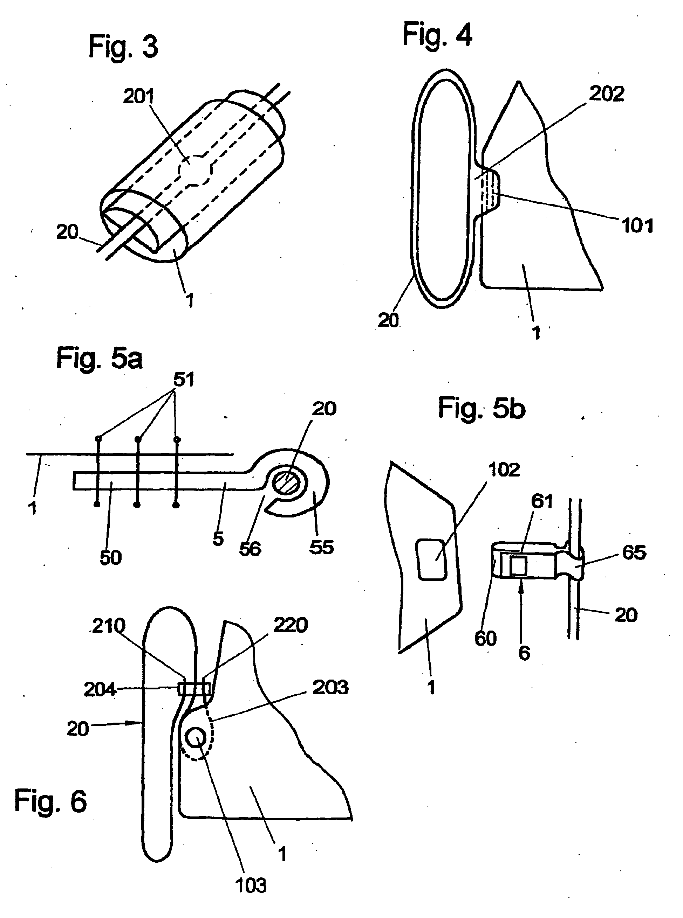

Anhand der Figuren 3 bis 9 werden nun verschiedene Möglichkeiten zur Verbindung eines Abschnittes des längserstreckten Elementes 20 bzw. 30 mit einem Abschnitt des Gassackes 1, insbesondere im Bereich des hinteren Endes der Unterkante des Gassackes 1, dargestellt. Der Gassack 1 besteht hierbei vorzugsweise aus einem oder mehreren Gewebeteilen, die zur Bildung eines geschlossenen Arbeitsraumes des Gassackes miteinander vernäht sind. Das als Seil oder Band ausgebildete längserstreckte Element kann beispielsweise aus Kunststoff oder gewobenem Material bestehen.

Die in den Figuren 3 bis 5b dargestellten Verbindungen zwischen einem Gassack und einem längserstreckten Element in Form eines Seiles eignen sich dabei insbesondere auch für solche Fälle, in denen das Seil 20 eine geschlossene Seilschlaufe bildet. Diese geschlossene Seilschlaufe wird durch Verbinden, z. B. Verschweißen, der beiden freien Enden eines Seiles hergestellt.

Bei dem Ausführungsbeispiel gemäß Figur 3 ist an einem Abschnitt des Seiles 20 eine Verdickung 201 ausgebildet, die mit einem Abschnitt des Gassackes 1 verschweißt ist.

Bei dem Ausführungsbeispiel gemäß Figur 4 ist an einem Abschnitt des Seiles 20 eine Verbreiterung, z. B. in Form einer Fahne 202, ausgebildet, die mittels einer Naht 101 mit einem Abschnitt des Gassackes 1 vernäht ist.

Gemäß Figur 5a ist an einem Teil der Gassackhülle 1 mittels einer Naht 51 ein Abschnitt 50 eines Klipselementes 5 befestigt, das das Seil 20 mit einem federelastisch ausgebildeten Endabschnitt 55 umgreift, in den das Seil 20 durch eine Öffnung 56 hindurch unter Aufspreizung des federelastischen Abschnittes 55 einführbar ist.

In Figur 5b ist eine Anordnung dargestellt, bei der der Gassack 1 eine Durchgangsöffnung 102 aufweist, in die ein mit einer Einführöffnung 61 versehener Abschnitt 60 eines Klipselementes 6 eingefädelt ist, das mit einem weiteren Abschnitt 65 das Seil 20 umgreift.

Nach Figur 6 ist an dem Seil 20 eine Halterung 204 vorgesehen, an der dessen beide freien Enden 210, 220 zur Bildung einer Seilschlaufe befestigt sind. Dabei ist ein Abschnitt 203 des Seiles 20 zusätzlich schlaufenförmig um einen Abnäher 103 des Gassackes 1 herumgelegt, so dass das Seil 20 hierüber mit dem Gassack 1 verbunden ist.

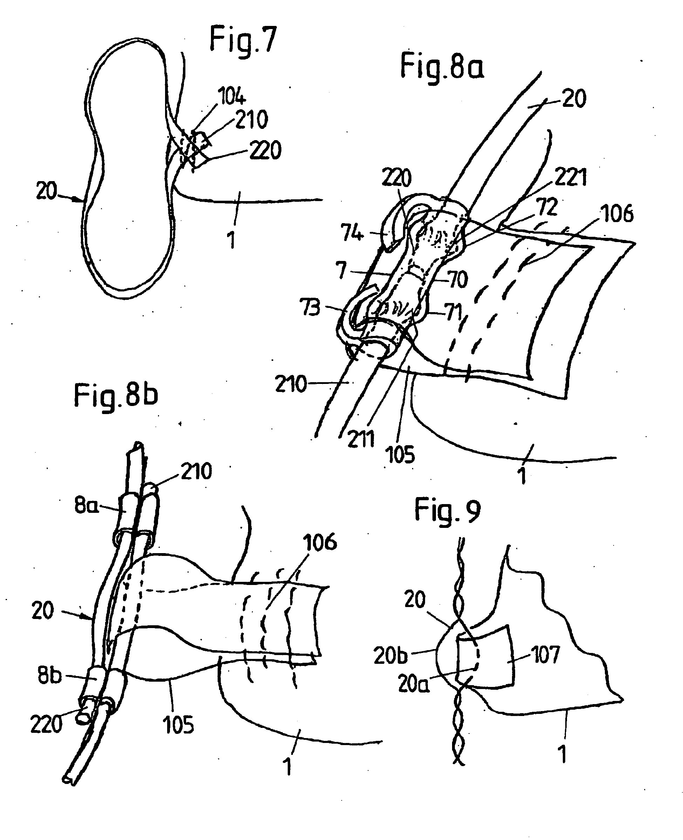

Bei dem Ausführungsbeispiel gemäß Figur 7 sind die beiden freien Enden 210, 220 eines als Band ausgebildeten längserstreckten Elementes 20 an einer Befestigungsstelle mittels einer Naht 104 mit der Hülle eines Gassackes 1 verbunden.

Bei dem in Figur 8a gezeigten Ausführungsbeispiel sind die beiden freien Enden 210, 220 eines Seiles 20 jeweils mit einer Verdickung 211 bzw. 221 versehen, mittels der sie formschlüssig in entsprechenden Ausbuchtungen 71, 72 des Grundkörpers 70 eines Klipselementes 7 gehalten werden. Das Klipselement 7 weist zwei einander gegenüberliegende Klipsabschnitte 73, 74 auf, die jeweils einen Rand einer Tasche 105 formschlüssig umgreifen, die mittels einer Naht 106 an der Hülle eines Gassackes 1 befestigt ist.

In Figur 8b ist ebenfalls an der Hülle eines Gassackes 1 mittels einer Naht 106 eine Tasche 105 befestigt, die von einem Endabschnitt 210 des Seiles 20 durchgriffen wird, während der andere Endabschnitt 220 des Seiles 20 außen an der Tasche 105 vorbeigeführt ist. Die beiden Endabschnitte 210, 220 des Seiles 20 sind an zwei entlang der Erstreckungsrichtung des Seiles 20 voneinander beabstandeten Befestigungsstellen 8a, 8b beidseits der Tasche 105 miteinander verbunden, so dass die Tasche 105 zwischen den beiden Endabschnitten 210, 220 des Seiles 20 sowie den zugehörigen Befestigungselementen 8a, 8b formschlüssig aufgenommen ist.

Bei dem Ausführungsbeispiel gemäß Figur 9 wird eine einstückig an der Hülle des Gassackes 1 ausgebildete Tasche 107 von einem Strang 20a eines aus zwei Strängen 20a, 20b gebildeten Seiles 20 durchgriffen, so dass die Tasche 107 formschlüssig zwischen den beiden Strängen 20a, 20b aufgenommen ist.

## Patentansprüche

1. Insassenschutzeinrichtung für Kraftfahrzeuginsassen mit einem Gassack, der an einer Kraftfahrzeugkarosserie im Bereich der seitlichen Dachkante des Kraftfahrzeugs anzuordnen ist und der sich beim Aufblasen zum Schutz eines Fahrzeuginsassen von der Dachkante her nach unten entfaltet, so dass er sich im aufgeblasenen Zustand vor mindestens einem Seitenfenster des Kraftfahrzeugs erstreckt, wobei die Oberkante des Gassackes entlang der Dachkante verläuft und die Unterkante des Gassackes unterhalb der Dachkante verläuft, und mit Führungsmitteln, durch die die Unterkante des Gassackes beim Aufblasen entlang der Entfaltungsrichtung geführt wird, wobei die Unterkante des Gassackes (1) mit einem an der Kraftfahrzeugkarosserie in Entfaltungsrichtung des Gassackes (1) beweglich geführten Abschnitt (21, 31) eines längserstreckten Elementes (20, 30) verbunden ist, das längserstreckte Element (20, 30) mittels zweier Umlenkelemente (26, 27; 36, 37) geführt ist, die entlang der Entfaltungsrichtung (z) des Gassackes (1) voneinander beabstandet sind und mit jeweils einem karosseriefesten Teil (H1, H2) verbunden sind, und die Bewegung des längserstreckten Elementes (20, 30) in Entfaltungsrichtung durch den sich entfaltenden Gassack (1) hervorgerufen ist und wobei das längserstreckte Element (20, 30) mittels der Umlenkelemente (26, 27; 36, 37) bereits vor dem Entfalten des Gassackes (1) definiert geführt ist,
**dadurch gekennzeichnet,**
**dass** das längserstreckte Element (20, 30) derart geführt und gestrafft ist, dass beim Aufblasen und Entfalten des Gassackes (1) keine wesentliche Auslenkung des längserstreckten Elementes (20, 30) quer zu seiner Erstreckungsrichtung erfolgt.

2. Insassenschutzeinrichtung nach Anspruch 1, **dadurch gekennzeichnet, dass** das längserstreckte Element (20, 30) durch ein flexibles Zugmittel gebildet wird.

3. Insassanschutzeinrichtung nach Anspruch 1 oder 2, **dadurch gekennzeichnet, dass** das längserstreckte Element (20, 30) durch ein Seil oder ein Band gebildet wird.

4. Insassenschutzeinrichtung nach einem der vorhergehenden Ansprüche, **dadurch gekennzeichnet, dass** eine Rücklaufsperre (4) vorgesehen ist, durch die eine Bewegung des längserstreckten Elementes (20, 30) entgegen der Richtung, entlang der sich das längserstreckte Element (20, 30) beim Entfalten des Gassackes bewegt hat, verhindert wird.

5. Insassenschutzeinrichtung nach Anspruch 4, **dadurch gekennzeichnet, dass** die Rücklaufsperre (4) neben einem Umlenkelement (26, 36) angeordnet ist.

6. Insassenschutzeinrichtung nach einem der vorhergehenden Ansprüche, **dadurch gekennzeichnet, dass** das längserstreckte Element (20) als geschlossene Schlaufe ausgebildet ist.

7. Insassenschutzeinrichtung nach einem der Ansprüche 1 bis 5, **dadurch gekennzeichnet, dass** das längserstreckte Element (30) mit einem Ende (31a) mit dem Gassack (1) und mit dem anderen Ende (33a) mit einem karosseriefesten Teil (H2) verbunden ist.

8. Insassenschtzeinrichtung nach einem der vorhergehenden Ansprüche, **dadurch gekennzeichnet, dass** mindestens ein Umlenkelement (28, 27; 36) direkt mit einem karosseriefesten Teil (H1, H2) verbunden ist.

9. Insassenschutzeinrichtung nach einem der vorhergehenden Ansprüche oder 10, **dadurch gekennzeichnet, dass** mindestens ein Umlenkelement (37) über eine weitere Baugruppe (38) mit einem karosseriefesten Teil (H1) verbunden ist.

10. Insassenschutzeinrichtung nach einem der vorhergehenden Ansprüche, **dadurch gekennzeichnet, dass** eine Bewegung des Abschnittes (31) des längserstreckten Elementes (30) in Entfaltungsrichtung des Gassackes (1) durch Federkraft unterstützt wird.

11. Insassenschutzeinrichtung nach Anspuch 10, **dadurch gekennzeichnet, dass** das längserstreckte Element (30) mittels der Federkraft gestrafft wird.

12. Insassenschutzeinrichtung nach einem der vorhergehenden Ansprüche, **dadurch gekennzeichnet, dass** der Abschnitt (31) des längserstreckten Elementes (30) derart geneigt bezüglich der Hauptentfaltungsrichtung (-z) des Gassackes (1) geführt ist, dass die Unterkante des Gassackes (1) beim Entfallen des Gassackes (1) zunehmend gestrafft wird.

13. Insassenschutzainrichtung nach einem der vorhergehenden Ansprüche, **dadurch gekennzeichnet, dass** zumindest ein Teil der Mittel (2, 3) zur Führung der Unterkante des Gassackes (1) an einer Halteplatte (H1) für einen Gasgenerator (G) zum Aufblasen des Gassackes (1) angeordnet Ist.

14. Insassenschutzeinrichtung nach einem der vorhergehenden Ansprüche, **dadurch gekennzeichnet, dass** die Unterkante des Gassackes (1) an einem Ende durch die Führungsmittel (2, 3) beim Entfalten geführt wird und am anderen Ende karosseriefest fixiert ist.

15. Insassenschutzeinrichtung nach einem der vorhergehenden Ansprüche, **dadurch gekennzeichnet, dass** die Führungsmittel (2, 3) an einer vertikalen Säule (B) des Kraftfahrzeugs vorgesehen sind.

16. Insassenschutzeinrichtung nach einem der vorhergehenden Ansprüche, **dadurch gekennzeichnet, dass** zur Verbindung des längserstreckten Elementes (20, 30) mit dem Gassack (1) eine unlösbare Verbindung dient.

17. Insassenschutzeinrichtung nach Anspruch 16, **dadurch gekennzeichnet, dass** die unlösbare Verbindung durch Schweißen, Kleben oder Nähen hergestellt ist.

18. Insassenschutzeinrichtung nach einem der Ansprüche 1 bis 15, **dadurch gekennzeichnet, dass** das längserstreckte Element (20, 30) lösbar mit dem Gassack (1) verbunden ist.

19. Insassenschtzeinrichung nach Anspruch 18, **dadurch gekennzeichnet, dass** die Verbindung zwischen längserstrecktern Element (20, 30) und Gassack (1) mittels eines Klipselementes (5, 6, 7) erfolgt.

20. Insassenschutzeinrichtung nach Anspruch 18, **dadurch gekennzeichnet, dass** das längserstreckte Element (20, 30) einen hierfür vorgesehenen Bereich (103, 105, 107) des Gassackes (1) umschlingt.

21. Insassenschutzeinrichtung nach einem der vorhergehenden Ansprüche, **dadurch gekennzeichnet, dass** zur Verbindung des Gassackes (1) mit dem längserstreckten Element (20, 30) am Gassack (1) eine Öffnung (102) oder eine Tasche (103, 105, 107) vorgesehen ist.

## Claims

1. Occupant protection device for motor vehicle occupants, with an airbag which is to be arranged on a motor vehicle body in the region of the lateral roof edge of the motor vehicle and which is deployed downwards from the roof edge during inflation for the protection of a vehicle occupant, so that, in the inflated state, it extends in front of at least one side window of the motor vehicle, the top edge of the airbag running along the roof edge, and the lower edge of the airbag running below the roof edge, and with guide means by which the lower edge of the airbag is guided in the direction of deployment during inflation, the lower edge of the airbag (1) being connected to a portion (21, 31) of a longitudinally extended element (20, 30), the said portion being guided movably on the motor vehicle body in the direction of deployment of the airbag (1), the longitudinally extended element (20, 30) being guided by means of two deflection elements (26, 27; 36, 37) which are spaced apart from one another along the direction of deployment (z) of the airbag (1) and are in each case connected to a body-fixed part (H1, H2), and the movement of the longitudinally extended element (20,30) in the direction of deployment being brought about by the airbag (1) as it is deployed and the longitudinally extended element (20, 30) being guided in a defined manner by means of the deflection elements (26, 27; 36, 37) even before the deployment of the airbag (1), **characterized in that** the longitudinally extended element (20, 30) is guided and/or tautened in such a way that no appreciable deflection of the longitudinally extended element (20, 30) transversely to its direction of extent takes place during the inflation and deployment of the airbag (1).

2. Occupant protection device according to Claim 1, **characterized in that** the longitudinally extended element (20, 30) is formed by a flexible traction means.

3. Occupant protection device according to Claim 1 or 2, **characterized in that** the longitudinally extended element (20, 30) is formed by a cable or a band.

4. Occupant protection device according to one of the preceding claims, **characterized in that** a run-back stop (4) is provided, by means of which a movement of the longitudinally extended element (20, 30) opposite to the direction in which the longitudinally extended element (20, 30) has moved during the deployment of the airbag is prevented.

5. Occupant protection device according to Claim 4, **characterized in that** the run-back stop (4) is arranged next to a deflection element (26, 36).

6. Occupant protection device according to one of the preceding claims, **characterized in that** the longitudinally extended element (20) is designed as a closed loop.

7. Occupant protection device according to one of Claims 1 to 5, **characterized in that** the longitudinally extended element (30) is connected with one end (31a) to the airbag (1) and with the other end (33a) to a body-fixed part (H2).

8. Occupant protection device according to one of the preceding claims, **characterized in that** at least one deflection element (26, 27; 36) is connected directly to a body-fixed part (H1, H2).

9. Occupant protection device according to one of the preceding claims, **characterized in that** at least one deflection element (37) is connected to a body-fixed part (H1) via a further subassembly (38).

10. Occupant protection device according to one of the preceding claims, **characterized in that** a movement of the portion (31) of the longitudinally extended element (30) in the direction of deployment of the airbag (1) is assisted by spring force.

11. Occupant protection device according to Claim 10, **characterized in that** the longitudinally extended element (30) is tautened by means of the spring force.

12. Occupant protection device according to one of the preceding claims, **characterized in that** the portion (31) of the longitudinally extended element (30) is guided at an inclination with respect to the main direction of deployment (z) of the airbag (1) in such a way that the lower edge of the airbag (1) is increasingly tautened during the deployment of the airbag (1).

13. Occupant protection device according to one of the preceding claims, **characterized in that** at least part of the means (2, 3) for guiding the lower edge of the airbag (1) is arranged on a holding plate (H1) for a gas generator (G) for inflating the airbag (1).

14. Occupant protection device according to one of the preceding claims, **characterized in that,** during deployment, the lower edge of the airbag (1) is guided at one end by the guide means (2, 3) and is secured in a body-fixed manner at the other end.

15. Occupant protection device according to one of the preceding claims, **characterized in that** the guide means (2, 3) are provided on a vertical column (B) of the motor vehicle.

16. Occupant protection device according to one of the preceding claims, **characterized in that** an unreleasable connection serves for connecting the longitudinally extended element (20, 30) to the airbag (1).

17. Occupant protection device according to Claim 16, **characterized in that** the unreleasable connection is made by welding, adhesive bonding or stitching.

18. Occupant protection device according to one of Claims 1 to 15, **characterized in that** the longitudinally extended element (20, 30) is connected releasably to the airbag (1).

19. Occupant protection device according to Claim 18, **characterized in that** the connection between the longitudinally extended element (20, 30) and the airbag (1) takes place by means of a clip element (5, 6, 7).

20. Occupant protection device according to Claim 18, **characterized in that** the longitudinally extended element (20, 30) loops around a region (103, 105, 107), provided for this purpose, at the airbag (1).

21. Occupant protection device according to one of the preceding claims, **characterized in that** an orifice (102) or a pocket (103, 105, 107) is provided on the airbag (1) for connecting the airbag (1) to the longitudinally extended element (20, 30).

## Revendications

1. Dispositif de protection de passager de véhicule comprenant un sac gonflable, qui doit être agencé sur une carrosserie de véhicule au niveau du bord latéral du toit du véhicule et qui, lorsqu'il est gonflé, se déploie du bord du toit vers le bas pour protéger un passager de véhicule, de telle sorte qu'à l'état gonflé, il s'étend au moins devant une vitre latérale du véhicule, sachant que le bord supérieur du sac gonflable s'étend le long du bord du toit et que le bord inférieur du sac gonflable s'étend en dessous du bord du toit, comprenant également des moyens de guidage qui, lors du gonflement, guident le bord inférieur du sac gonflable dans le sens de déploiement, sachant que le bord inférieur du sac gonflable (1) est rattaché à un tronçon (21, 31) d'un élément long (20, 30), guidé de façon mobile dans le sens de déploiement du sac gonflable (1) sur la carrosserie du véhicule, sachant que l'élément long (20, 30) est guidé au moyen de deux éléments de renvoi (26, 27 ; 36, 37), qui sont séparés le long du sens de déploiement (z) du sac gonflable (1) et sont liés à chacune d'une partie de la carrosserie (H1, H2), le mouvement de l'élément long (20, 30) est provoqué dans le sens de déploiement par le sac gonflable (1) se déployant et où l'élément long (20, 30) est guidé de manière définie par les éléments de renvoi (26, 27 ; 36, 37) préalablement au déploiement du sac gonflable (1), **caractérisé en ce que** l'élément long (20, 30) est guidé et tendu de façon que lors du gonflement et du déploiement du sac gonflable (1) aucune déviation significative de l'élément long (20, 30) perpendiculairement à sa direction d'étendue n'est produite.

2. Dispositif de protection de passager de véhicule selon la revendication 1, **caractérisé en ce que** l'élément long (20, 30) est formé au moyen d'un moyen de traction flexible.

3. Dispositif de protection de passager de véhicule selon la revendication 1 ou 2, **caractérisé en ce que** l'élément long (20, 30) est formé au moyen d'un câble ou d'une courroie.

4. Dispositif de protection de passager de véhicule selon l'une quelconque des revendications précédentes, **caractérisé en ce qu'**il est muni d'un cliquet anti-retour (4) permettant d'éviter un mouvement de l'élément long (20, 30) dans le sens inverse de son mouvement lors du déploiement du sac gonflable.

5. Dispositif de protection de passager de véhicule selon la revendication 4, **caractérisé en ce que** le cliquet anti-retour (4) est agencé à côté d'un élément de renvoi (26, 36).

6. Dispositif de protection de passager de véhicule selon l'une quelconque des revendications précédentes, **caractérisé en ce que** l'élément le plus long (20) est formé comme un noeud coulant fermé.

7. Dispositif de protection de passager de véhicule selon l'une quelconque des revendications 1 à 5, **caractérisé en ce que** l'élément long (30) est rattaché par une extrémité (31a) au sac gonflable (1) et par l'autre extrémité (33a) à une pièce fixée à la carrosserie (H2).

8. Dispositif de protection de passager de véhicule selon l'une des revendications précédentes, **caractérisé en ce que** au moins un élément de renvoi (26, 27 ; 36) est rattaché directement à une pièce fixée à la carrosserie (H1, H2).

9. Dispositif de protection de passager de véhicule selon l'une des revendications précédentes, **caractérisé en ce que** au moins un élément de renvoi (37) est rattaché à une pièce fixée à la carrosserie (H1) par l'intermédiaire d'un groupe d'assemblage supplémentaire (38).

10. Dispositif de protection de passager de véhicule selon l'une quelconque des revendications précédentes, **caractérisé en ce qu'**une force élastique facilite le mouvement du tronçon (31) de l'élément long (30) dans le sens de déploiement du sac gonflable (1).

11. Dispositif de protection de passager de véhicule selon la revendication 10, **caractérisé en ce que** l'élément le plus long (30) est tendu au moyen de la force élastique.

12. Dispositif de protection de passager de véhicule selon l'une quelconque des revendications précédentes, **caractérisé en ce que** le tronçon (31) de l'élément long (30) est guidé de façon inclinée relativement au sens principal de déploiement (z) du sac gonflable (1) de telle manière que le bord inférieur du sac gonflable (1) est tendu plus fermement au fur et à mesure du déploiement du sac gonflable (1).

13. Dispositif de protection de passager de véhicule selon l'une quelconque des revendications précédentes, **caractérisé en ce que** au moins une partie des moyens de guidage (2, 3) du bord inférieur du sac gonflable (1) est agencée sur une plaque de support (H1) pour un générateur de gaz (G) pour le gonflement du sac gonflable (1).

14. Dispositif de protection de passager de véhicule selon l'une quelconque des revendications précédentes, **caractérisé en ce que** le bord inférieur du sac gonflable (1) est guidé par une extrémité par les moyens de guidage (2, 3) lors du déploiement et est fixé à la carrosserie par l'autre extrémité.

15. Dispositif de protection de passager de véhicule selon l'une quelconque des revendications précédentes, **caractérisé en ce que** les moyens de guidage (2, 3) sont prévus sur une colonne verticale (B) du véhicule.

16. Dispositif de protection de passager de véhicule selon l'une quelconque des revendications précédentes, **caractérisé en ce qu'**une liaison indétachable est utilisée pour la jonction de l'élément long (20, 30) avec le sac gonflable (1).

17. Dispositif de protection de passager de véhicule selon la revendication 16, **caractérisé en ce que** la liaison indétachable est réalisée par soudage, par collage ou par piquage.

18. Dispositif de protection de passager de véhicule selon l'une quelconque des revendications 1 à 15, **caractérisé en ce que** l'élément long (20, 30) est rattaché au sac gonflable (1) de façon détachable.

19. Dispositif de protection de passager de véhicule selon la revendication 18, **caractérisé en ce que** la liaison entre l'élément long (20, 30) et le sac gonflable (1) est réalisée au moyen d'un élément clip (5, 6, 7).

20. Dispositif de protection de passager de véhicule selon la revendication 18, **caractérisé en ce que** l'élément long (20, 30) maintient étroitement le sac gonflable (1) au niveau d'une zone prévue à cet effet (103, 105, 107).

21. Dispositif de protection de passager de véhicule selon l'une quelconque des revendications précédentes, **caractérisé en ce que** le sac gonflable (1) est muni d'une ouverture (102) ou d'une poche (103, 105, 107) destinée à la liaison du sac gonflable (1) avec l'élément long (20, 30).
